(19) **Europäisches Patentamt**
**European Patent Office**
**Office européen des brevets**

(11) **EP 2 584 324 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
**G01F 23/284** (2006.01) **G01S 7/292** (2006.01)
**G01S 13/70** (2006.01)

(21) Anmeldenummer: **11185454.3**

(22) Anmeldetag: **17.10.2011**

(54) **Füllstandsmessgerät und Verfahren zur Bestimmung eines funktionalen Zusammenhangs zwischen verschiedenen Tracks**

Fill level measuring device and method for determining a functional correlation between different tracks

Appareil de mesure du niveau de remplissage et procédé de détermination d'un rapport fonctionnel entre différentes pistes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.04.2013 Patentblatt 2013/17**

(73) Patentinhaber: **VEGA Grieshaber KG**
**77709 Wolfach (DE)**

(72) Erfinder:
• **Welle, Roland**
**77709 Oberwolfach (DE)**

• **Hoferer, Christian**
**77654 Offenburg (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 2 366 983    DE-A1- 10 260 962**
**DE-A1- 19 824 267    US-B1- 7 334 451**

## Beschreibung

Gebiet der Erfindung

Die Erfindung betrifft das technische Gebiet der Füllstandmessung. Insbesondere betrifft die Erfindung ein Füllstandmessgerät zum Berechnen eines funktionalen Zusammenhangs zwischen zwei Tracks zur Bestimmung eines Füllstands, ein Verfahren zum Berechnen eines solchen funktionalen Zusammenhangs zur Bestimmung eines Füllstands, ein Programmelement und ein computerlesbares Medium.

Technischer Hintergrund

Die vorliegende Erfindung bezieht sich auf ein Verfahren zur Bestimmung der Position einer Füllgutoberfläche bei der Messung von Füllständen aller Art.

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus die Lage oder Position einer Oberfläche zumindest eines der im Behälter befindlichen Füllgüter ab.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht, als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums oder Füllguts wird ein Teil der ankommenden Signale reflektiert, und gelangt nach entsprechender Laufzeit wieder zurück zum Füllstandmessgerät. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden auch diese Signale reflektiert, und gelangen nach Passage des Mediums und der überlagerten Atmosphäre wieder zurück zum Füllstandmessgerät.

Das Füllstandmessgerät empfängt die an verschiedenen Stellen reflektierten Signale und bestimmt daraus die Distanz zum Füllgut.

Die bestimmte Distanz zum Füllgut wird nach außen hin bereitgestellt. Die Bereitstellung kann in analoger Form (4..20 mA Schnittstelle) oder auch in digitaler Form (Feldbus) realisiert werden.

Allen Verfahren gemein ist, dass sich das zur Messung verwendete Signal auf dem Weg vom Füllstandmessgerät hin zur Füllgutoberfläche im Regelfall im Einflussbereich eines weiteren Mediums befindet, welches nachfolgend als Überlagerungsmedium bezeichnet werden soll. Dieses Überlagerungsmedium befindet sich zwischen dem Füllstandmessgerät und der Oberfläche des zu vermessenden Mediums, und wird im Allgemeinen durch eine Flüssigkeit oder eine gasförmige Atmosphäre dargestellt.

In der überwiegenden Zahl an Anwendungsfällen befindet sich oberhalb des zu vermessenden Mediums Luft. Da sich die Ausbreitung elektromagnetischer Wellen in Luft nur unwesentlich von der in Vakuum unterscheidet, bedarf es keiner besonderen Korrekturen der Signale, welche vom Füllgut, den Behältereinbauten und dem Behälter selbst durch die Luft hindurch zum Füllstandmessgerät zurück reflektiert werden.

In Prozessbehältern der chemischen Industrie können weiterhin aber alle Arten von chemischen Gasen und Gasgemischen als Überlagerungsmedium auftreten. In Abhängigkeit von den physikalischen Eigenschaften dieser Gase oder Gasgemische werden die Ausbreitungseigenschaften elektromagnetischer Wellen im Vergleich zu einer Ausbreitung im Vakuum oder in Luft verändert.

Die nachfolgenden Ausführungen konzentrieren sich auf die Betrachtung des häufig anzutreffenden Anwendungsfalls eines einzigen zu vermessenden Mediums oder Füllguts in einem Behälter. Die im Folgenden dargelegten Zusammenhänge können auf den Anwendungsfall zweier verschiedener Medien oder Füllgüter in einem Behälter übertragen werden. Die Position einer Füllgutoberfläche mag im Zusammenhang mit einer Trennschichtmessung insbesondere auch die Position einer Trennschicht zwischen zwei unterschiedlichen Medien oder Füllgütern sein, welche identisch ist mit der Position der Füllgutoberfläche des unteren der beiden Füllgüter oder Medien in einem Behälter zur Trennschichtmessung.

Es sind Verfahren bekannt, bei denen zur Bestimmung des Füllstandes ist eine exakte Klassifizierung des zu vermessenden Echos notwendig ist. Füllstandsmessverfahren, die auf Echo-Tracking beruhen, sind beispielsweise aus EP 2366983 A1 und DE 198 24 267 A1 bekannt.

Zusammenfassung der Erfindung

Es ist eine Aufgabe der Erfindung, eine alternative Füllstandbestimmung zu ermöglichen. Die Aufgabe wird durch die Merkmale der Ansprüche 1, 10, 11 und 12 gelöst. Gemäß einem ersten Aspekt der Erfindung ist ein Füllstandmessgerät angegeben, welches eine Echokurvenerfassungseinheit zum Erfassen mehrerer, zeitlich aufeinanderfolgender Echokurven aufweist. Darüber hinaus weist das Füllstandmessgerät eine Auswerteeinheit auf, welche in jeder der erfassten Echokurven jeweils ein erstes Echo und (zumindest) ein zweites Echo bestimmen kann, indem sie die Echokurven auswertet.

Das erste Echo wird hierbei einem beliebigen ersten Track und das zweite Echo einem beliebigen zweiten Track der Echokurven zugeordnet. Der Begriff Track umschreibt hier eine Folge von Positionswerten, die sich aus den Positionen der zugeordneten Echos berechnet. Weiterhin ist die Auswerteeinheit zum Berechnen eines ersten funktionalen Zusammenhangs zwischen den Positionen des ersten Tracks und den Positionen des zweiten Tracks der Echokurven ausgeführt.

Die Echokurvenerfassungseinheit dient darüber hinaus dem Erfassen einer weiteren, zeitlich nachfolgenden Echokurve, woraufhin die Auswerteeinheit die Position eines ersten Echos der weiteren Echokurve durch Auswerten der weiteren Echokurve bestimmt, wobei das erste Echo dem ersten Track zugeordnet wird. Weiterhin ist die Auswerteeinheit zum darauf folgenden Berechnen der Position des zweiten Tracks der weiteren Echokurve unter Verwendung der Position des ersten Echos der weiteren Echokurve, oder der Position des ersten Tracks der weiteren Echokurve, sowie des ersten funktionalen Zusammenhangs ausgeführt.

Zu beachten ist dabei, dass der Track nicht unmittelbar Bestandteil der Echokurve sein muss. Ein Track kann auch innerhalb einer separaten Funktion ausgewertet und fortgeführt werden. Die Formulierung, dass der Track zu der Echokurve gehört, bedeutet, dass der Track und die Echokurve zueinander konsistent sind. Dies mag bedeuten, dass ein Echo, welches in der Echokurve aufgefunden wurde, dem Track bereits zugeordnet wurde. Weiterhin mag das bedeuten, dass, wenn kein Echo der Echokurve dem Track zugeordnet werden kann, die Trackposition dennoch aktualisiert wurde.

Die Aktualisierung unterscheidet sich je nach eingesetztem Verfahren. Wird kein Echo der weiteren Echokurve dem Track zugeordnet, so kann die Position des Tracks der ersten Echokurve als neue Position des Tracks der weiteren Echokurve verwendet werden. Weiterhin kann die Position des Tracks der weiteren Echokurve aus dem bisherigen Verlauf des Tracks und dem zeitlichen Abstand zwischen der ersten und der weiteren Echokurve berechnet werden. Darüber hinaus mag es sein, dass ein Track, wenn ihm kein Echo der weiteren Echokurve zugeordnet wurde, nur den Zeitstempel der weiteren Echokurve (dies mag der Abtastzeitpunkt der Echokurve sein) übernimmt. Auch dieser Track kann dann als Track der weiteren Echokurve bezeichnet werden.

In anderen Worten können also jeweils zwei Tracks miteinander verglichen werden, so dass ein funktionaler Zusammenhang zwischen den einzelnen Positionen des einen Tracks und den entsprechenden Positionen des anderen Tracks berechnet werden kann. Dieser funktionale Zusammenhang zwischen den Positionen der beiden Tracks wird dann verwendet, um die Position des zweiten Tracks aus der Position des ersten Tracks zu bestimmen.

Es wird also ein funktionaler Zusammenhang zwischen jeweils zwei Tracks bestimmt. Hierbei kann die Position des einen Tracks zu einem bestimmten Zeitpunkt mit der entsprechenden Position des diesem Track angehörenden, beispielsweise des zuletzt hinzugefügten, Echos identisch sein. Dies ist aber nur eine Ausführungsform des eingesetzten Tracking-Algorithmus. Es gibt weitere Verfahren, die die Position eines Tracks zum Beispiel aus dem gewichteten Mittel mehrerer Reflexionen oder aus dem Mittel zwischen Vorhersage und Messungen (Tracking mittels Kalman-Filters) berechnen. Hier entspricht dann mitunter die Position des zuletzt aufgenommen Echos nicht exakt der aktuellen Position des Tracks.

Bei der Position des in der neuen Echokurve bestimmten ersten Echos kann es sich somit um die Position des ersten Tracks zu diesem Zeitpunkt handeln. Allerdings kann die Position des ersten Tracks nicht nur anhand der weiteren Echokurve (also dem neu bestimmten ersten Echo) bestimmt werden, sondern zusätzlich unter Zuhilfenahme weiterer Informationen, bspw. durch Anwendung eines Filters.

Gemäß einem weiteren Aspekt der Erfindung handelt es sich bei dem funktionalen Zusammenhang um einen linearen Zusammenhang, welcher aus den einzelnen Trackpositionen berechnet wird.

Gemäß einem weiteren Aspekt der Erfindung ist die Auswerteeinheit weiterhin ausgeführt, die Position jeweils eines dritten Echos in jeder der erfassten Echokurven durch Auswerten der Echokurven zu bestimmen, wobei die dritten Echos einem beliebigen dritten Track zugeordnet sind. Daraufhin kann ein Berechnen eines zweiten funktionalen Zusammenhangs zwischen den Positionen des zweiten Tracks und den Positionen des dritten Tracks der Echokurven erfolgen. Daraufhin wird die Position eines dritten Echos der weiteren Echokurve durch Auswerten der weiteren Echokurve bestimmt, wobei das dritte Echo dem dritten Track angehört. Danach erfolgt ein Berechnen der Position des zweiten Tracks der weiteren Echokurve unter Verwendung der Position des dritten Echos der weiteren Echokurve, oder der Position des dritten Tracks, sowie des zweiten funktionalen Zusammenhangs.

Gemäß einem weiteren Aspekt der Erfindung ist die Auswerteeinheit weiterhin zum Mitteln der berechneten Positionen der zweiten Echos der weiteren Echokurve ausgeführt.

Gemäß einem weiteren Aspekt der Erfindung ist die Auswerteeinheit weiterhin zum Mitteln der berechneten Positionen des zweiten Tracks der weiteren Echokurve ausgeführt.

Gemäß einem weiteren Aspekt der Erfindung kann eine Plausibilitätskontrolle der berechneten Positionen des zweiten Echos der weiteren Echokurve durchgeführt werden. Dies kann nach einer Klassifizierung der entsprechenden Tracks erfolgen.

Gemäß einem weiteren Aspekt der Erfindung ist die Auswerteeinheit weiterhin zum Berechnen der Position des zweiten Tracks der weiteren Echokurve unter Verwendung der funktionalen Zusammenhänge zwischen allen N(N-1)/2 Paaren der N Tracks der Echokurven ausgeführt, wobei N eine positive ganze Zahl ist.

Gemäß einem weiteren Aspekt der Erfindung ist die Auswerteeinheit weiterhin ausgeführt zum Berechnen der Position des zweiten Tracks der weiteren Echokurve unter Verwendung nur der funktionalen Zusammenhänge zwischen N-1 Paaren der N Tracks der Echokurven, wobei N eine positive ganze Zahl ist.

Gemäß einem weiteren Aspekt der Erfindung handelt es sich bei den ersten Echos um Mehrfachechos, welche auf Mehrfachreflexionen zurückzuführen sind.

Gemäß einem weiteren Aspekt der Erfindung handelt es sich bei den ersten Echos um Mehrfachechos der Füllgutoberfläche und bei den zweiten Echos um Einfachechos der Füllgutoberfläche, also um die eigentlichen Füllstandechos.

Bei einem Mehrfachecho handelt es sich um ein Echo, das auf eine mehrfache Reflexion des Sendesignals an derselben Reflexionsstelle (z.B. der Füllgutoberfläche, einer Trennfläche zwischen zwei Medien des Füllgutes, einer Behältereinbaute oder dem Behälterboden) zurückgeht. Bei einem Bodenecho handelt es sich um ein Echo, das auf eine Reflexion des Sendesignals am Behälterboden des Füllgutbehälters zurückgeht. Weiterhin mag es sich bei einem Mehrfachecho um ein reflektiertes Signal handeln, welches, bevor es empfangen wurde, zumindest einmal an einer Deckenfläche reflektiert worden ist.

Gemäß einem weiteren Aspekt der Erfindung ist ein Verfahren zur Bestimmung eines Füllstands angegeben, bei dem mehrere, zeitlich aufeinanderfolgende Echokurven erfasst werden. Daraufhin werden jeweils ein erstes Echo und ein zweites Echo in jeder der erfassten Echokurven durch Auswerten der Echokurven bestimmt, wobei die ersten Echos einem beliebigen ersten Track und die zweiten Echos einem beliebigen zweiten Track der Echokurven zugeordnet werden. Danach erfolgt ein Berechnen eines ersten funktionalen Zusammenhangs zwischen den Positionen des ersten Tracks und den Positionen des zweiten Tracks der Echokurven. Weiterhin (davor oder danach) wird eine weitere, zeitlich folgende Echokurve erfasst, woraufhin die Position eines ersten Echos der weiteren Echokurve durch Auswerten der weiteren Echokurve bestimmt wird, wobei das erste Echo dem ersten Track angehört. Daraufhin erfolgt ein Berechnen der Position eines zweiten Tracks der weiteren Echokurve unter Verwenden der Position des ersten Echos der weiteren Echokurve, oder der Position des ersten Tracks, sowie des ersten funktionalen Zusammenhangs.

Gemäß einem weiteren Aspekt der Erfindung ist ein Programmelement angegeben, das, wenn es auf einem Prozessor eines Füllstandmessgeräts ausgeführt wird, das Füllstandmessgerät anweist, die oben und im Folgenden beschriebenen Verfahrensschritte durchzuführen.

Gemäß einem weiteren Aspekt der Erfindung ist ein computerlesbares Medium angegeben, auf welchem ein Programmelement gespeichert ist, das, wenn es bei einem Prozessor eines Füllstandmessgeräts ausgeführt wird, das Füllstandmessgerät anweist, die oben und im Folgenden beschriebenen Verfahrensschritte durchzuführen.

Im Folgenden werden mit Verweis auf die Figuren Ausführungsbeispiele der Erfindung beschrieben.

Kurze Beschreibung der Figuren

Fig. 1 zeigt ein Radarfüllstandmessgerät mit einem Behälter gemäß einem Ausführungsbeispiel der Erfindung.

Fig. 2 zeigt Echokurven.

Fig. 3 zeigt ein Blockschaltbild einer Signalverarbeitung gemäß einem Ausführungsbeispiel der Erfindung.

Fig. 4 zeigt eine diagrammatische Darstellung des Zusammenhangs von Trackpositionen gemäß einem Ausführungsbeispiel der Erfindung.

Fig. 5 zeigt den Verlauf zweier Tracks.

Fig. 6 zeigt eine diagrammatische Darstellung des Zusammenhangs von Trackpositionen zweier Tracks gemäß einem Ausführungsbeispiel der Erfindung.

Fig. 7 zeigt ein Verfahren zur Reduktion der Kombinatorik bei der Füllstandbestimmung gemäß einem Ausführungsbeispiel der Erfindung.

Detaillierte Beschreibung von Ausführungsbeispielen

Die Darstellungen in den Figuren sind schematisch und nicht maßstäblich. Werden in verschiedenen Figuren die gleichen Bezugszeichen verwendet, so können diese gleiche oder ähnliche Elemente bezeichnen. Gleiche oder ähnliche Elemente können aber auch durch verschiedene Bezugszeichen bezeichnet sein.

Bei der Füllstandmessung können verschiedene Verfahren angewendet werden, nach denen die Position einer Füllgutoberfläche in einem Behälter ermittelt werden kann.

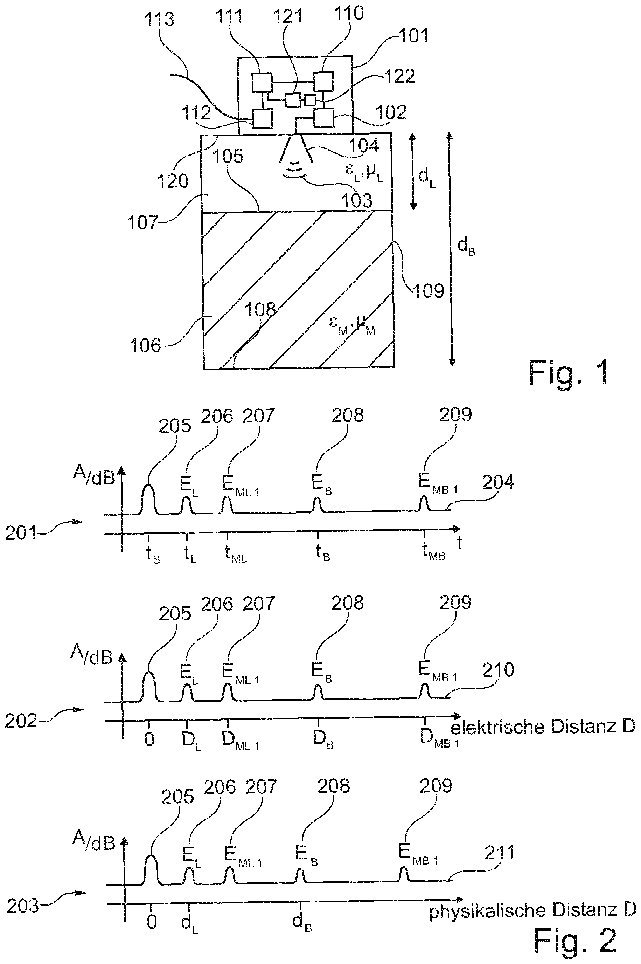

Fig. 1 zeigt eine Anordnung zur Füllstandmessung. Der Behälter 109 ist bis zu einer Füllhöhe $d_B - d_L$ mit einer Flüssigkeit 106 gefüllt. Der Raum 107 über der Flüssigkeit sei beispielsweise mit Luft gefüllt. Im vorliegenden Beispiel wird die Flüssigkeit mit Luft als Überlagerungsmedium bedeckt.

Das Füllstandmessgerät 101 erzeugt mit Hilfe einer Hochfrequenzeinheit 102 einen elektromagnetischen Impuls 103 und koppelt diesen in eine geeignete Antenne 104 ein, woraufhin sich dieser Impuls annähernd mit Lichtgeschwindigkeit in Richtung der zu vermessenden Füllgutoberfläche 105 ausbreitet. Die exakte Geschwindigkeit innerhalb des Überlagerungsmediums ergibt sich durch:

$$c_L = \frac{c_0}{\sqrt{\varepsilon_L \cdot \mu_L}}$$

wobei $c_0$ die Lichtgeschwindigkeit im Vakuum, $\varepsilon_L$ die Permittivitätszahl des Überlagerungsmediums und $\mu_L$ die Permeabilitätszahl des Überlagerungsmediums beschreibt.

Die Füllgutoberfläche 105 reflektiert einen Teil der ankommenden Signalenergie, woraufhin sich der reflektierte Signalanteil wieder zurück zum Füllstandmessgerät 101 fortpflanzt. Der nicht reflektierte Signalanteil dringt in die Flüssigkeit 106 ein, und breitet sich darin mit stark verminderter Geschwindigkeit in Richtung des Behälterbodens aus. Die Geschwindigkeit $c_M$ der elektromagnetischen Welle 103 innerhalb der Flüssigkeit 106 wird durch die Materialeigenschaften der Flüssigkeit 106 bestimmt:

$$c_M = \frac{c_0}{\sqrt{\varepsilon_M \cdot \mu_M}}$$

wobei $c_0$ die Lichtgeschwindigkeit im Vakuum, $\varepsilon_M$ die Permittivitätszahl der Flüssigkeit und $\mu_M$ die Permeabilitätszahl der Flüssigkeit beschreibt. Am Boden 108 des Behälters 109 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe der Hochfrequenzeinheit 102 aufbereitet, und beispielsweise in einen niederfrequenteren Zwischenfrequenzbereich transformiert. Mit Hilfe einer Analog-Digital-Wandlereinheit 110 werden die analogen Echokurven, welche von der Hochfrequenzeinheit 102 bereitgestellt werden, digitalisiert und einer Auswerteeinheit 111 zur Verfügung gestellt.

Die vorgenannten Komponenten, welche zur Bereitstellung einer digitalisierten Echokurve genutzt werden, also insbesondere die Hochfrequenzeinheit 102 und die Analog-Digital-Wandlereinheit 110, mögen beispielhaft eine Echokurvenerfassungseinrichtung definieren.

Die Auswerteeinheit 111 analysiert die digitalisierte Echokurve und bestimmt auf Basis der darin enthaltenen Echos nach bekannten Verfahren dasjenige Echo, das von der Reflexion an der Füllgutoberfläche 105 erzeugt wurde. Zudem bestimmt die Auswerteeinheit 111, welche in vorliegendem Beispiel auch als Vermessungseinrichtung dienen mag, die exakte elektrische Distanz bis zu diesem Echo. Weiterhin kann die ermittelte elektrische Distanz zum Echo derart korrigiert werden, dass Einflüsse des Überlagerungsmediums 107 auf die Ausbreitung der elektromagnetischen Wellen kompensiert werden. Die so errechnete, kompensierte Distanz zum Füllgut wird einer Ausgabeeinheit 112 übergeben, welche den bestimmten Wert entsprechend den Vorgaben des Benutzers weiter aufbereitet, beispielsweise durch Linearisierung, Offsetkorrektur, Umrechnung in eine Füllhöhe $d_B$ - $d_L$. Der aufbereitete Messwert wird an einer externen

Kommunikationsschnittstelle 113 nach außen hin bereitgestellt. Hierbei können alle etablierten Schnittstellen verwendet werden, insbesondere 4..20 mA - Stromschnittstellen, industrielle Feldbusse wie HART, Profibus, FF, oder aber auch Computerschnittstellen wie RS232, RS485, USB, Ethernet oder FireWire.

Der Prozessor 121steuert die Auswerteeinheit 111 und kann selbstverständlich Teil der Auswerteeinheit sein. Weiterhin ist ein Speicherelement (computerlesbares Medium 122) vorgesehen, auf welchem ein Programmelement zur Steuerung des Prozessors gespeichert ist.

Fig. 2 verdeutlicht nochmals im Detail wichtige Schritte, die im Rahmen der Echosignalverarbeitung in der Auswerteeinheit 111 zur Kompensation der Einflüsse verschiedener Medien angewendet werden.

Der Kurvenzug 201 zeigt zunächst die von der Analog-Digital-Wandlereinheit 110 über der Zeit hinweg erfasste Echokurve 204. Die Echokurve beinhaltet zunächst den innerhalb der Antenne reflektierten Anteil des Sendeimpulses 205. Kurze Zeit später wird zum Zeitpunkt $t_L$ ein erstes Echo 206 erfasst, welches durch die Reflexion von Signalanteilen an der Grenzfläche 105 oder Oberfläche 105 des Mediums 106 im Behälter verursacht wird. Ein weiteres Echo 207 entsteht als erstes Vielfachecho des Füllgutechos 206, und wird zum Zeitpunkt $t_{ML}$ erfasst. Die in das Medium 106 eindringenden Signalanteile werden nach Durchlaufen des Füllguts 106 am Behälterboden 108 reflektiert, und erzeugen ein weiteres Echo 208 innerhalb der Echokurve 204. Dieses Bodenecho 208 wird zum Zeitpunkt $t_B$ erfasst. Weiterhin möge zum Zeitpunkt $t_{MB}$ ein Vielfachecho 209 des Bodenechos erfasst werden.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve ausschließlich durch eine Ausbreitung im Vakuum gebildet hat. Die Ordinate der Darstellung 201 wird durch Multiplikation mit der Lichtgeschwindigkeit im Vakuum in eine Distanzachse umgerechnet. Zudem wird durch Verrechnung eines Offsets erreicht, dass das von der Antenne 104 verursachte Echo 205 den Distanzwert 0m erhält. Weiterhin werden die Distanzwerte mit dem Faktor 0,5 multipliziert, um den doppelten Weg hin zur Füllgutoberfläche und zurück zu eliminieren.

Die zweite Darstellung 202 zeigt die Echokurve als Funktion der elektrischen Distanz D. Die elektrische Distanz entspricht der halben Distanz, die eine elektromagnetische Welle im Vakuum in einer bestimmten Zeit zurücklegt. Die elektrische Distanz berücksichtigt keinerlei Einflüsse eines Mediums, welche möglicherweise zu einer langsameren Ausbreitung der elektromagnetischen Wellen führen. Kurvenzug 202 stellt daher eine unkompensierte, aber auf Orte bezogene Echokurve dar.

In der vorliegenden Beschreibung werden elektrische Distanzen immer mit Großbuchstaben D bezeichnet, wohingegen physikalische Distanzen, welche direkt am Behälter nachgemessen werden können, mit kleinen Buchstaben $d$ bezeichnet werden.

Es mag weiterhin möglich sein, die Echokurve 210 vollständig zu kompensieren. Die dritte Darstellung 203 zeigt eine vollkompensierte Echokurve 211. Um eine Darstellung der Echos über der physikalischen Distanz zu erreichen, muss im vorliegenden Fall der Einfluss des Überlagerungsmediums 107 im Bereich zwischen den Orten 0 und $D_L$ (Kurvenzug 202) berücksichtigt werden. Die elektrischen Distanzangaben der Abszisse müssen zwischen 0 und $D_L$ in physikalische Distanzangaben gemäß folgendem Zusammenhang umgerechnet werden:

$$d_i = \frac{D_i}{\sqrt{\varepsilon_L \cdot \mu_L}}$$

Da $\varepsilon_{Luft}$ und $\mu_{Luft}$ in guter Näherung dem Wert 1 entsprechen, muss für diesen Abschnitt im vorliegenden Beispiel keine Korrektur erfolgen. Die elektrischen Distanzangaben der Abszisse größer gleich $D_L$ müssen jedoch in physikalische Distanzangaben gemäß folgendem Zusammenhang umgerechnet werden:

$$d_i = d_L + \frac{(D_i - D_L)}{\sqrt{\varepsilon_M \cdot \mu_M}}$$

Die dritte Darstellung 203 zeigt schließlich den korrigierten Verlauf. Sowohl die Distanz zum Echo 206 der Füllgutoberfläche 105 als auch die Distanz zu dem vom Behälterboden 108 erzeugten Echo 208 stimmen mit den am Behälter 109 nachmessbaren Distanzen überein. Die Distanz zum Mehrfachecho 207 der Füllgutoberfläche kann nicht direkt am Behälter nachgemessen werden, da obige Kompensation nur für direkte Reflektionen gültig ist. Gleiches gilt für das Mehrfachecho 209 der Reflektion am Behälterboden 108.

Es sei an dieser Stelle daraufhingewiesen, dass die Umsetzung in Kurvenzug 202, also die Bestimmung der elektrischen Distanzen oder der Position verschiedener Echos, im Rahmen der Signalverarbeitung im Füllstandmessgerät beispielsweise für alle Echos durchgeführt wird. Die Umsetzung der Echokurve in eine kompensierte Echokurve wird im Allgemeinen nicht durchgeführt, genügt doch die Korrektur eines einzelnen Distanzwertes oder der Position eines Echos.

Probleme können bei dem oben beschriebenen Füllstandmessgerät insofern auftreten, dass nicht nur die reflektierten Signalanteile von der Füllgutoberfläche empfangen werden, sondern vielmehr unerwünschte Reflektionen auftreten, die von sogenannten Störstellen im Behälter ausgelöst werden. Eine Störstelle im Behälter kann beispielsweise von Einbauten oder der Behältergeometrie selbst hervorgerufen werden. Neben den Störstellen können zudem auch sogenannte Mehrfach- oder Vielfachreflektionen das Nutzsignal derart überlagern, dass sowohl die Identifizierung der Nutzsignale von der Füllgutoberfläche als auch die exakte Vermessung der Nutzsignale stark beeinträchtigt werden.

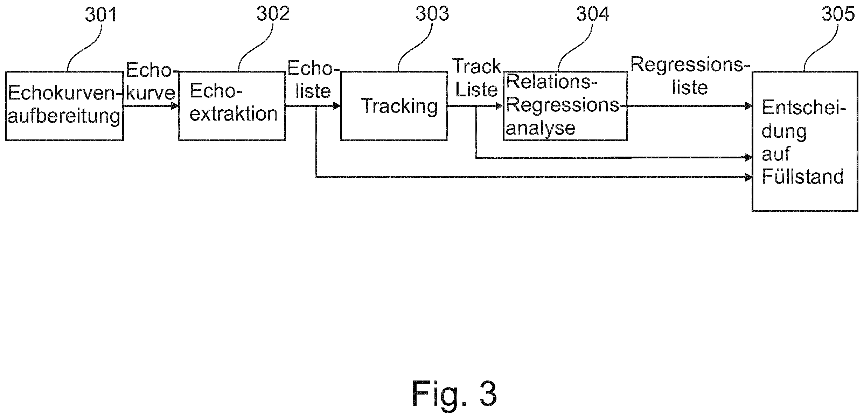

Eine mögliche Ausführung der Auswerteeinrichtung 111 eines Füllstandmessgerätes ist in Fig. 3 als Blockschaltbild detaillierter dargestellt. Die Echokurve kann zunächst einer Aufbereitung 301 unterzogen werden. Durch eine gezielte digitale Aufwertung des Signals z.B. durch eine digitale Filterung ist es einem Verfahren zur Echoextraktion 302 leichter möglich, die signifikanten Signalanteile aus der Echokurve zu bestimmen.

Die extrahierten Echos können zur weiteren Verarbeitung beispielsweise in Form einer Liste gespeichert werden. Es sind jedoch auch weitere Möglichkeiten für den Zugriff auf die Daten möglich als die Speicherung in einer Liste. Der Funktionsblock Tracking 303 ordnet die Echos einer Echokurve zum Zeitpunkt $t_i$ den Echos der darauffolgenden Echokurve zum Zeitpunkt $t_{i+1}$ zu, wobei die Echos dieselbe physikalische Reflexionsstelle und dieselbe Wegstrecke durchlaufen haben. Trackingverfahren sind bereits Stand der Technik und dem Fachmann bekannt. Nähere Informationen finden sich beispielsweise in WO 2009/037000 A2. Das Verfahren gemäß einem Ausführungsbeispiel der Erfindung ist im Blockschaltbild mit dem Namen Relations-Regressionsanalyse 304 bezeichnet. Ein Kernaspekt der Erfindung ist es, die Positionen zweier Tracks, das heißt die Positionen zweier verschiedener physikalischer Reflexionsstellen bzw. zweier Reflexionen, die verschiedene Wegstrecken zurückgelegt haben, untereinander in Relation zu setzen und daraus die Parameter eines linearen Zusammenhangs zu ermitteln. Jeder Track besteht aus einer Folge von Positionswerten, die aus den Echos einer Echokurve ermittelt wurden. Da bei Füllstandmessgeräten der Abstand vom Sensor zum Füllgut gemessen werden soll, wird neben dem Begriff Position auch der Begriff Distanz verwendet.

Im Ausführungsbeispiel der Figur 3 werden die Echo-, Track- und Regressionsliste dem Funktionsblock Entscheidung auf Füllstand (305) übergeben. Dieser Funktionsblock ermittelt unter anderem dasjenige Echo, welches durch die unmittelbare Reflexion an der Füllgutoberfläche entsteht und klassifiziert es als Füllstandsecho.

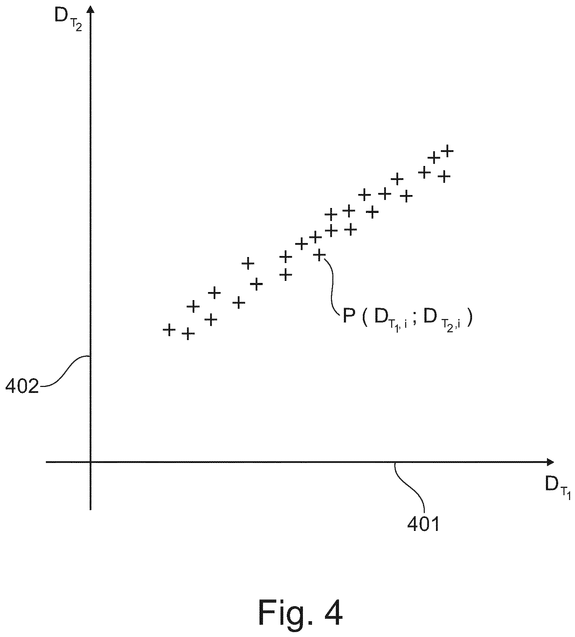

Fig. 4 soll den Sachverhalt der Relation zwischen zwei Tracks näher erläutern. Das Achsenkreuz zeigt eine Punktwolke, die aus den Distanzpaaren der einzelnen Positionswerte zweier Tracks gebildet wird.

Beispielsweise sind die Tracks als Track $T_1$ und Track $T_2$ bezeichnet. Es kann jedoch jede andere denkbare Kombination aus zwei verschiedenen Tracks herangezogen werden.

Jedes Distanzpaar ist durch ein Kreuz markiert. Die Abszissenachse (x-Achse 401) umfasst die Distanz $D$ des Tracks $T_1$, die Ordinatenachse (y-Achse 402) umfasst die Distanz D des Tracks $T_2$. Diese Anordnung ist nicht zwingend erforderlich. So könnte auch Abszissenachse und Ordinatenachse gegeneinander getauscht werden. Auch die Maßeinheit der Achsenskalierung ist für die Erfindung irrelevant. So steht hier die elektrische Distanz D nur beispielhaft. Auch eine zeitliche Skalierung der Position gemäß der Echokurve 204 wäre möglich. Ein Distanzpaar ist in Figur 4 zur genaueren Erläuterung gesondert markiert. Das Distanzpaar $P(D_{T_1,i}; D_{T_{ni}})$ beschreibt ein Wertepaar zweier Positionen von Track $T_1$ und Track $T_2$ zum Zeitpunkt i, an dem die Echokurve erzeugt wurde. Die anderen und nicht genauer bezeichneten Punkte im Diagramm stammen aus weiteren Echokurven, die zu anderen Zeitpunkten vom Sensor erfasst wurden. Eine neue vom Sensor erzeugte Echokurve, die aus einem weiteren Signalverarbeitungsdurchlauf stammt und deren Echos den Tracks zugeordnet wurden, würde das Diagramm um einen zusätzlichen Punkt erweitern. Der in Figur 4 dargestellte Zusammenhang der Positionen der beiden Tracks macht deutlich, dass sich die Positionen von Track $T_1$ und Track $T_2$ in Relation bringen lassen können. Das bedeutet, dass Track $T_1$ und Track $T_2$ in einem funktionalen Zusammenhang stehen. Eine Geradengleichung, die die Punktwolke beschreibt, dient dafür als Grundlage. Mathematisch lässt sich dieser Zusammenhang wie folgt beschreiben:

$$D_{T_2,k} = a_1 \cdot D_{T_1,k} + a_0 + e_k$$

$$(4.1)$$

$D_{T_2,k}$ ist die Position des Tracks $T_2$ der Messung zum Zeitpunkt $k$

$D_{T_1,k}$ ist die Position des Tracks $T_1$ der Messung zum Zeitpunkt $k$

$a_0$ und $a_1$ sind die Parameter einer Geraden, die den linearen Zusammenhang zwischen der Position von Track $T_1$ und Track $T_2$ beschreiben.

$e_k$ ist der Fehler des Zusammenhangs für die Messung zum Zeitpunkt $k$

Der Parameter $a_1$ der Funktion ist ohne Maßeinheit, wohingegen $a_0$ dieselbe Maßeinheit wie $D_{T_2,k}$ bzw. $D_{T_1,k}$ aufweist. $e_k$ trägt dieselbe Maßeinheit wie $D_{T_2,k}$ bzw. $D_{T_1,k}$. Die Postulierung eines Fehlers im gegebenen Zusammenhang ist notwendig, da so die Fehler des Modells zusammengefasst abgebildet werden. Die Parameter $a_1$ und $a_0$ sind abhängig von den gegebenen Eigenschaften der Messstelle, an welcher der Sensor zum Einsatz kommt. Zudem sind die Parameter abhängig vom Verlauf der Tracks, die miteinander in Relation gebracht werden. Formel (4.1) ist nur eine Ausprägung des Zusammenhangs. Natürlich lässt sie sich auf jeden Track anwenden und bedarf nicht unbedingt Track $T1$ und Track $T_2$ als Grundlage. Die Werte der Parameter $a_1$ und $a_0$ sind dann jedoch von dem Zusammenhang zwischen Track $T_1$ und Track $T_2$ verschieden.

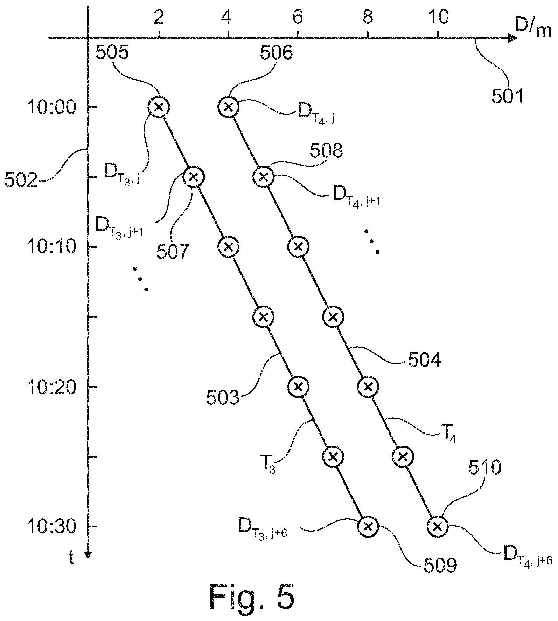

Fig. 5 zeigt den beispielhaften Verlauf zweier Tracks ($T_3$ 503 und $T_4$ 504) über die Zeit. Die x-Achse 501 bezeichnet die Distanz in Metern und die y-Achse 502 bezeichnet die Messzeit t. Die Stützstellen 505, 507, 509,... und 506, 508, 510,... der Tracks 503, 504, die sich aus den Echopositionen der Echokurven zum jeweiligen Zeitpunkt $j$ ergeben, sind jeweils durch ein x markiert.

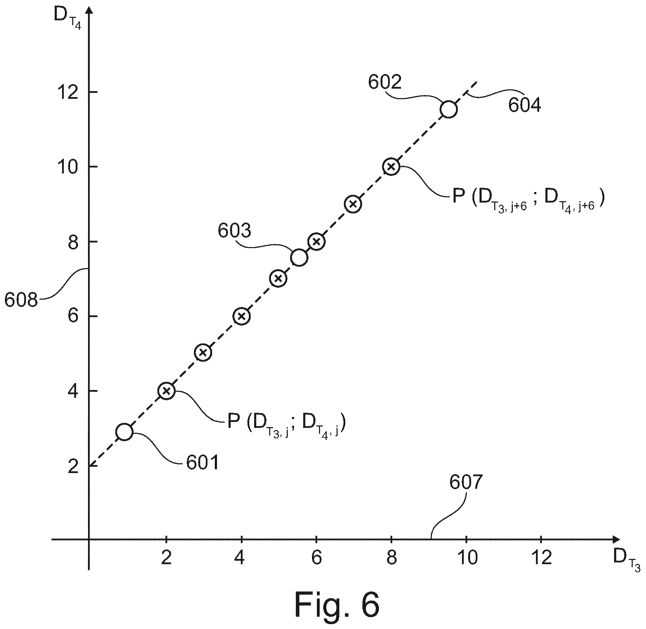

Überträgt man die Stützstellen aus Fig. 5 in ein Diagramm, das wie Fig. 4 die Relation zwischen beiden Tracks verdeutlicht, so erhält man das Diagramm in Fig. 6. Die x-Achse 607 umfasst hier die Positionen von Track $T_3$, die y-Achse 608 umfasst hier die Positionen von Track $T_4$. Zudem ist der lineare Zusammenhang 604 zwischen den beiden Tracks in Form einer unterbrochenen Linie eingezeichnet. Es ist nun zu erkennen, dass neben den Stützstellen in Fig. 6 auch weitere Aussagen über den Zusammenhang beider Tracks getroffen werden können. Sowohl für Positionen 603, die sich zwischen den Stützstellen befinden als auch für Positionen 602 und 601, die sich neben den Stützstellen befinden, kann der Zusammenhang angewandt werden. Ferner bedeutet dies, dass, wenn die Position des einen Tracks bekannt ist, die Position des anderen Tracks vorhergesagt werden kann. Diese Vorhersage ist umkehrbar. Im Beispiel aus Fig. 6 bedeutet dies, dass die Position von Track $T_4$ aus der Position von Track $T_3$ vorhergesagt werden kann und umgekehrt. Zudem kann nicht nur eine Vorhersage getroffen werden, sondern auch eine Schätzung der Position eines Tracks angegeben werden, wenn eine Bestimmung der Position des Tracks aufgrund von ungünstigen Signalverhältnissen nicht möglich wäre.

Bestimmung der Parameter $a_0$ und $a_1$:

Die Parameter $a_0$ und $a_1$ können vom Funktionsblock Relations-RegressionsAnalyse 304 selbständig bestimmt werden. Aufgrund des Fehlers im zugrundeliegenden Modell ist eine sogenannte Schätzung der Parameter vorteilhaft,

die den Fehler über die Bestimmung der Parameter minimiert. Die Schätzung an sich kann auf unterschiedliche Weise erfolgen. Möglich ist die Anwendung gängiger Parameterschätzverfahren, wie zum Beispiel LS-Schätzer. LS-Schätzer werden in der Literatur ausführlich beschrieben z.B. in Kiencke, Eger "Messtechnik - Systemtheorie für Elektrotechniker" ISBN 3-540-24310-0 oder Bronstein, Semendjajew, Musiol, Mühling "Taschenbuch der Mathematik" ISBN 3-8171-2006-0. Auch eine Bestimmung der Ausgleichs- oder Regressionsgeraden nach Lothar Papula "Mathematik für Ingenieure und Naturwissenschaftler Band 3" ISBN 3-528-24937-4 ist möglich. Eine Schätzung kann beispielsweise so gestaltet sein:

$$D_{T_2} = \widehat{a}_1 \cdot D_{T_1} + \widehat{a}_0$$

$D_{T_2}$ ist die Position des Tracks $T_2$
$D_{T_1}$ ist die Position des Tracks $T1$
$\widehat{a}_0$ und $\widehat{a}_1$ sind die geschätzten Parameter einer Geraden, die den linearen Zusammenhang zwischen der Position von Track $T_1$ und Track $T_2$ beschreiben.

Um die Positionspaare nicht kontinuierlich im Speicher halten zu müssen, können die genannten Verfahren auch rekursiv implementiert werden. Die Schätzung kann zunächst fehlerhaft sein, verbessert sich aber mit steigender Anzahl an Wertepaaren. Es ist natürlich nötig, zuerst die Parameter zu ermitteln, bevor eine Vorhersage der aktuellen Position des einen Tracks aus der Position des anderen Track getroffen werden kann.

Die beschriebene Erfindung lässt sich nutzbringend erweitern. Die Echokurve zeigt häufig eine große Anzahl an Echos, was viele Tracks nach sich zieht. Im beschriebenen Verfahren werden im allgemeinen Fall alle Tracks untereinander in Bezug gesetzt. Das bedeutet, dass aus jedem einzelnen Track direkt eine Aussage über den Ort jedes anderen Tracks gemacht werden kann. Die Anzahl A der aufzustellenden funktionalen Zusammenhänge lässt sich in Abhängigkeit zu der Anzahl N an Tracks mit der Formel

$$A = N \cdot (N - 1)/2$$

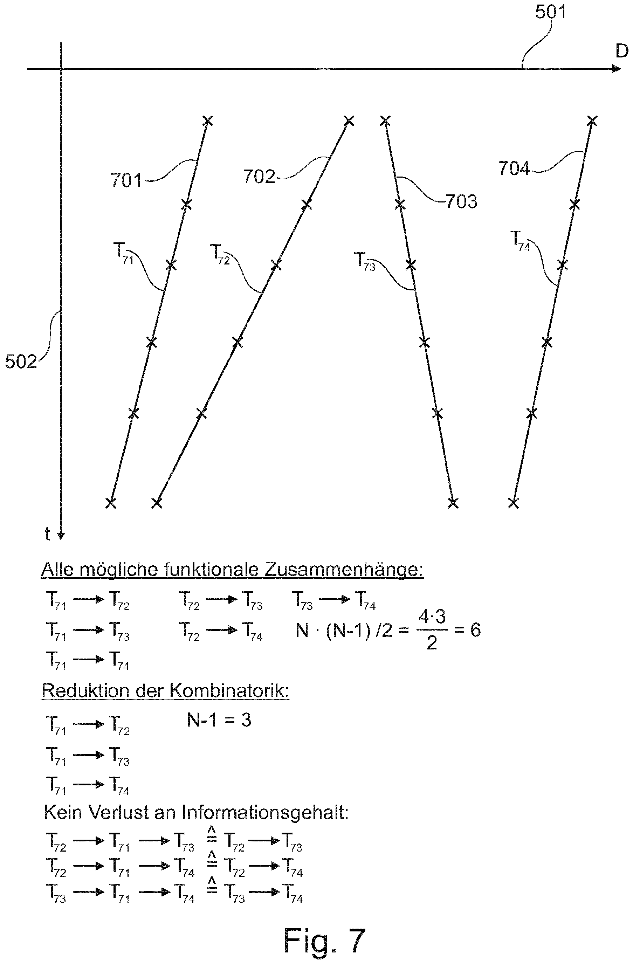

berechnen. Bei vier verfolgten Tracks müssen dann sechs Zusammenhänge erstellt, berechnet, gepflegt und gespeichert werden. Eine Erweiterung der Erfindung ergibt sich durch gezielte Reduktion der Kombinatorik. Fig. 7 zeigt die vollständige Auflistung bei vier verschiedenen Tracks. Die funktionalen Zusammenhänge sind durch einen Pfeil dargestellt. Die Richtung des Pfeils ist nur beispielhaft, da der Zusammenhang auch umkehrbar ist. Ist beispielsweise der Zusammenhang $T_{71} \rightarrow T_{72}$ bekannt, so ist auch der Zusammenhang $T_{72} \rightarrow T_{71}$ durch Bildung der Umkehrfunktion berechenbar. Weiterhin zeigt Fig. 7 eine Möglichkeit der Reduktion der Kombinatorik ohne dabei die Aussagekraft der Erfindung zu vermindern. Beispielhaft wurde die Reduktion anhand des Tracks $T_{71}$ durchgeführt. Die Zusammenhänge zwischen $T_{72}$ und $T_{73}$, $T_{72}$ und $T_{74}$ bzw. $T_{73}$ und $T_{74}$ können aus den Zusammenhänge $T_{71}$ und $T_{72}$, $T_{71}$ und $T_{73}$ bzw. $T_{71}$ und $T_{74}$ berechnet werden. Es ist dann nur noch die Speicherung und Erweiterung von

$$A = N - 1$$

(in Fig. 7 dann drei) funktionalen Zusammenhängen nötig. Die Reduktion setzt voraus, dass ein Track als Ursprung der Reduktion gewählt werden muss. Dieser Track könnte man auch als Zwischentrack bezeichnen. Im Beispiel aus Fig.7 ist dies Track $T_{71}$. Selbstverständlich könnte auch jeder andere Track als Zwischentrack der Reduktion gewählt werden. Dass kein Informationsgehalt verloren geht, zeigt die Berechnungskette aus Figur 7. Beispielsweise lässt sich der Zusammenhang zwischen $T_{72} \rightarrow T_{73}$ aus den beiden Zusammenhängen $T_{71} \rightarrow T_{72}$ und $T_{71} \rightarrow T_{73}$ ermitteln. Dazu muss die Umkehrfunktion $T_{71} \leftarrow T_{72}$ von $T_{71} \rightarrow T_{72}$ gebildet werden. Anschließend lässt sich der erweiterte Zusammenhang $T_{72} \rightarrow T_{71} \rightarrow T_{73}$ aufstellen und den Ort von Track $T_{73}$ aus Track $T_{72}$ bestimmen ohne zuvor die Parameter des funktionalen Ausdrucks für den Zusammenhang $T_{72} \rightarrow T_{73}$ geschätzt zu haben. Hier ergeben sich Vorteile in der Performanz, da das Schätzen der Parameter sich als rechenintensiv erweist. Zudem wird Speicherplatz eingespart. Kernaspekt der Erweiterung ist also, dass die Kombinatorik reduziert werden kann, wenn beim Berechnen der Position eines Tracks $T_A$ aus der Position eines Tracks $T_B$ immer über einen Zwischentrack $T_C$ gerechnet wird.

Ein Kernaspekt des beschriebenen Verfahrens liegt im Schätzen der Parameter einer Zielfunktion, die dann den Zusammenhang der Position zwischen zwei Tracks beschreibt. Wurden die Parameter der Zielfunktion während des Betriebs des Füllstandmessgeräts hinreichend gut ermittelt, so kann aus der Position des einen Tracks auf die Position eines anderen Tracks geschlossen werden. Da die Parameter abhängig von der Messstelle sind (Einbauort, Stutzen, Flansch, Behälterboden, Behälterdecke, Füllgut, Einbauten im Behälter), kann eine Parametrierung im Werk nicht erfolgen.

**Patentansprüche**

1. Füllstandmessgerät (101), das nach dem FMCW-Verfahren oder dem Impuls-Laufzeitverfahren arbeitet, aufweisend:

    eine Echokurvenerfassungseinheit (104, 102, 110) zum Erfassen mehrerer, zeitlich aufeinanderfolgender Echokurven, die jeweils mindestens ein Echo aufweisen;
    eine Auswerteeinheit (111), ausgeführt zum Durchführen eines Tracking-Verfahrens und zum:

    Bestimmen jeweils eines ersten Echos und eines zweiten Echos in jeder der erfassten Echokurven durch Auswerten der Echokurven, wobei die ersten Echos einem beliebigen ersten Track und die zweiten Echos einem beliebigen zweiten Track zugeordnet werden; **dadurch gekennzeichnet, dass** die Auswerteeinheit (111) weiter ausgeführt ist zum: Berechnen eines ersten funktionalen Zusammenhangs zwischen zeitlich aufeinanderfolgenden Positionen des ersten Tracks und zeitlich aufeinanderfolgenden Positionen des zweiten Tracks der Echokurven;
wobei die Echokurvenerfassungseinheit (104, 102, 110) zum Erfassen einer weiteren, zeitlich nachfolgenden Echokurve ausgeführt ist;
wobei die Auswerteeinheit (111) weiterhin ausgeführt ist zum:

> Bestimmen der Position eines ersten Echos der weiteren Echokurve durch Auswerten der weiteren Echokurve, wobei das erste Echo dem ersten Track angehört;
> Berechnen einer
> Position des zweiten Tracks der weiteren Echokurve unter Verwendung der Position des ersten Echos der weiteren Echokurve, oder der Position des ersten Tracks der weiteren Echokurve, und des ersten funktionalen Zusammenhangs.

2. Füllstandmessgerät nach Anspruch 1,
wobei der erste funktionale Zusammenhang ein linearer Zusammenhang ist.

3. Füllstandmessgerät nach einem der vorhergehenden Ansprüche, wobei die Auswerteeinheit (111) weiterhin ausgeführt ist zum:

> Bestimmen der Positionen jeweils eines dritten Echos in jeder der erfassten Echokurven durch Auswerten der Echokurven, wobei die dritten Echos einem beliebigen dritten Track zugeordnet werden;
> Berechnen eines zweiten funktionalen Zusammenhangs zwischen den Positionen des zweiten Tracks und den Positionen des dritten Tracks der Echokurven;
> Bestimmen der Position eines dritten Echos der weiteren Echokurve durch Auswerten der weiteren Echokurven, wobei das dritte Echo dem dritten Track angehört;
> Berechnen der Position des zweiten Tracks der weiteren Echokurve unter Verwendung der Position des dritten Echos der weiteren Echokurve, oder der Position des dritten Tracks der weiteren Echokurve, und des zweiten funktionalen Zusammenhangs.

4. Füllstandmessgerät nach Anspruch 3, wobei die Auswerteeinheit (111) weiterhin ausgeführt ist zum:

Mitteln der berechneten Positionen des zweiten Echos der weiteren Echokurve.

5. Füllstandmessgerät nach einem der vorhergehenden Ansprüche, wobei die Auswerteeinheit (111) weiterhin ausgeführt ist zum:
Durchführen einer Plausibilitätskontrolle der berechneten Position des zweiten Echos der weiteren Echokurve.

6. Füllstandmessgerät nach einem der vorhergehenden Ansprüche, wobei die Auswerteeinheit (111) weiterhin ausgeführt ist zum:
Berechnen der Position des zweiten Tracks der weiteren Echokurve unter Verwendung der funktionalen Zusammenhänge zwischen allen N(N-1)/2 Paaren der N Tracks der Echokurven, wobei N eine positive ganze Zahl ist.

7. Füllstandmessgerät nach einem der vorhergehenden Ansprüche, wobei die Auswerteeinheit (111) weiterhin ausgeführt ist zum:
Berechnen der Position des zweiten Tracks der weiteren Echokurve unter Verwendung nur der funktionalen Zusammenhänge zwischen N-1 Paaren der N Tracks der Echokurven, wobei N eine positive ganze Zahl ist.

8. Füllstandmessgerät nach einem der vorhergehenden Ansprüche,
wobei die ersten Echos Mehrfachechos sind, welche auf Mehrfachreflexionen zurückzuführen sind.

9. Füllstandmessgerät nach einem der vorhergehenden Ansprüche,
wobei die ersten Echos Mehrfachechos der Füllgutoberfläche sind; und wobei die zweiten Echos Einfachechos der Füllgutoberfläche sind.

10. Verfahren zur Bestimmung eines Füllstandes nach dem FMCW-Verfahren oder dem Impuls-Laufzeitverfahren, das Verfahren aufweisend die Schritte:

> Erfassen mehrerer, zeitlich aufeinanderfolgender Echokurven, die jeweils mindestens ein Echo aufweisen;
> Durchführen eines Tracking-Verfahrens;
> Bestimmen jeweils eines ersten Echos und eines zweiten Echos in jeder der erfassten Echokurven durch Auswerten der Echokurven, wobei die ersten Echos einem beliebigen ersten Track und die zweiten Echos einem beliebigen zweiten Track zugeordnet werden;
> Berechnen eines ersten funktionalen Zusammenhangs zwischen zeitlich aufeinanderfolgenden Positionen des ersten Tracks und zeitlich aufeinanderfolgenden Positionen des zweiten Tracks der Echokurven;

Erfassen einer weiteren Echokurve;
Bestimmen der Position eines ersten Echos der weiteren, zeitlich nachfolgenden Echokurve durch Auswerten der weiteren Echokurve, wobei das erste Echo dem ersten Track angehört;
Berechnen einer
Position des zweiten Tracks der weiteren Echokurve unter Verwendung der Position des ersten Echos der weiteren Echokurve, oder der Position des ersten Tracks der weiteren Echokurve, und des ersten funktionalen Zusammenhangs.

11. Programmelement, das, wenn es auf einem Prozessor (121) eines Füllstandmessgerätes (101) ausgeführt wird, das Füllstandmessgerät anweist, die Schritte gemäß Anspruch 10 durchzuführen.

12. Computerlesbares Medium (122), auf welchem ein Programmelement gemäß Anspruch 11 gespeichert ist.

**Claims**

1. Filling level measuring device (101) that operates according to the FMCW method or the pulse time method, comprising:

    an echo curve detection unit (104, 102, 110) for detecting a plurality of temporally successive echo curves, each comprising at least one echo;
    an evaluation unit (111) configured to execute a tracking method and configured to:

    determine a first echo and a second echo in each of the echo curves detected, respectively, by evaluating the echo curves, the first echoes being assigned to an arbitrary first track and the second echoes being assigned to an arbitrary second track;
    **characterized in that** the evaluation unit (111) is further configured to:

    calculate a first functional relationship between the temporally successive positions of the first track and the temporally successive positions of the second track of the echo curves;
    wherein the echo curve detection unit (104, 102, 110) is configured to detect an additional, temporally subsequent echo curve;
    the evaluation unit (111) being further configured to:

    determine the position of a first echo of the additional echo curve by evaluating the additional echo curve, the first echo belonging to the first track;
calculate a position of the second track of the additional echo curve based on using the position of the first echo of the additional echo curve, or the position of the first track of the additional echo curve, and the first functional relationship.

2. Filling level measuring device according to claim 1, the first functional relationship being a linear relationship.

3. Filling level measuring device according to any of the preceding claims, the evaluation unit (111) further being configured to:

    determine the positions of each third echo in each of the detected echo curves, respectively, by evaluating the echo curves, the third echoes being assigned to an arbitrary third track;
    calculate a second functional relationship between the positions of the second track and the positions of the third track of the echo curves;
    determine the position of a third echo of the additional echo curve by evaluating the additional echo curves, the third echo belonging to the third track;
    calculating the position of the second track of the additional echo curve based on using the position of the third echo of the additional echo curve, or the position of the third track of the additional echo curve, and the second functional relationship.

4. Filling level measuring device according to claim 3, the evaluation unit (111) being further configured to: average the calculated positions of the second track of the additional echo curve.

5. Filling level measuring device according to any of the preceding claims, the evaluation unit (111) being further configured to: carry out a plausibility control operation of the calculated position of the second track of the additional echo curve.

6. Filling level measuring device according to any of the preceding claims, the evaluation unit (111) being further configured to: calculate the position of the second track of the additional echo curve based on using the functional relationships between all N(N-1)/2 pairs of the N tracks of the echo curves, N being a positive whole number.

7. Filling level measuring device according to any of the preceding claims, the evaluation unit (111) being further configured to:

calculate the position of the second track of the additional echo curve based on using only the functional relationships between N-1 pairs of the N tracks of the echo curves, N being a positive whole number.

8. Filling level measuring device according to any of the preceding claims,
   the first echoes being multiple echoes which can be attributed to multiple reflections.

9. Filling level measuring device according any of the preceding claims,
   the first echoes being multiple echoes of the filling material surface; and
   the second echoes being single echoes of the filling material surface.

10. Method for determining a filling level based on the FMCW method or the pulse time method, the method comprising the steps of:

    detecting a plurality of temporally successive echo curves, each comprising at least one echo;
    determining a first echo and a second echo in each of the echo curves detected, respectively, by evaluating the echo curves, the first echoes being assigned to an arbitrary first track and the second echoes being assigned to an arbitrary second track;
    calculating a first functional relationship between the temporally successive positions of the first track and the temporally successive positions of the second track of the echo curves;
    detecting an additional echo curve;
    determining the position of a first echo of the additional, temporally subsequent echo curve by evaluating the additional echo curve, the first echo belonging to the first track;
    calculating a position of the second track of the additional echo curve based on using the position of the first echo of the additional echo curve, or the position of the first track of the additional echo curve, and the first functional relationship.

11. Program element which, when it is carried out on a processor (121) of a filling level measuring device (101), instructs the filling level measuring device to carry out the steps according to claim 10.

12. Computer-readable medium (122) on which a program element according to claim 11 is stored.

**Revendications**

1. Appareil de mesure de niveau de remplissage (101) fonctionnant selon le procédé FMCW ou le procédé du temps de propagation des impulsions, comportant :

une unité de détection de courbes d'échos (104, 102, 110) pour détecter plusieurs courbes d'échos successives dans le temps qui comportent respectivement au moins un écho,
une unité d'exploitation (111) configurée pour mettre en oeuvre un procédé de suivi et pour :

déterminer respectivement un premier écho et un deuxième écho dans chacune des courbes d'échos détectées en exploitant les courbes d'échos, dans lequel les premiers échos sont attribués à une première piste quelconque et les deuxième échos sont attribués à une deuxième piste quelconque,
**caractérisé en ce que** l'unité d'exploitation (111) est en outre configurée pour :

calculer une première relation fonctionnelle entre des positions successives dans le temps de la première piste et des positions successives dans le temps de la deuxième piste des courbes d'échos,
dans lequel l'unité de détection de courbes d'échos (104, 102, 110) est configurée pour détecter une courbe d'échos supplémentaire ultérieure dans le temps,
dans lequel l'unité d'exploitation (111) est en outre configurée pour :

déterminer la position d'un premier écho de la courbe d'échos supplémentaire en exploitant la courbe d'échos supplémentaire, dans lequel le premier écho appartient à la première piste,
calculer une position de la deuxième piste de la courbe d'échos supplémentaire en utilisant la position du premier écho de la courbe d'échos supplémentaire, ou la position de la première piste de la courbe d'échos supplémentaire, et la première relation fonctionnelle.

2. Appareil de mesure de niveau de remplissage selon la revendication 1,
   dans lequel la première relation fonctionnelle est une relation linéaire.

3. Appareil de mesure de niveau de remplissage selon l'une des revendications précédentes, dans lequel l'unité d'exploitation (111) est en outre configurée pour :

> déterminer les positions respectivement d'un troisième écho dans chacune des courbes d'échos détectées en exploitant les courbes d'échos, dans lequel les troisièmes échos sont attribués à une troisième piste quelconque, calculer une seconde relation fonctionnelle entre les positions de la deuxième piste et les positions de la troisième piste des courbes d'échos, déterminer la position d'un troisième écho de la courbe d'échos supplémentaire en exploitant les courbes d'échos supplémentaires, le troisième écho étant attribué à la troisième piste, calculer la position de la deuxième piste de la courbe d'échos supplémentaire en utilisant la position du troisième écho de la courbe d'échos supplémentaire, ou la position de la troisième piste de la courbe d'échos supplémentaire, et la seconde relation fonctionnelle.

4. Appareil de mesure de niveau de remplissage selon la revendication 3, dans lequel l'unité d'exploitation (111) est en outre configurée pour : calculer la moyenne des positions calculées du deuxième écho de la courbe d'échos supplémentaire.

5. Appareil de mesure de niveau de remplissage selon l'une des revendications précédentes, dans lequel l'unité d'exploitation (111) est en outre configurée pour : effectuer un contrôle de vraisemblance de la position calculée du deuxième écho de la courbe d'échos supplémentaire.

6. Appareil de mesure de niveau de remplissage selon l'une des revendications précédentes, dans lequel l'unité d'exploitation (111) est en outre configurée pour : calculer la position de la deuxième piste de la courbe d'échos supplémentaire en utilisant les relations fonctionnelles entre toutes les N(N-1)/2 paires des N pistes des courbes d'échos, où N est un nombre entier positif.

7. Appareil de mesure de niveau de remplissage selon l'une des revendications précédentes, dans lequel l'unité d'exploitation (111) est en outre configurée pour : calculer la position de la deuxième piste de la courbe d'échos supplémentaire en utilisant uniquement les relations fonctionnelles entre N-1 paires des N pistes des courbes d'échos, où N est un nombre entier positif.

8. Appareil de mesure de niveau de remplissage selon l'une des revendications précédentes, dans lequel les premiers échos sont des échos multiples qui sont attribués à des réflexions multiples.

9. Appareil de mesure de niveau de remplissage selon l'une des revendications précédentes,

> dans lequel les premiers échos sont des échos multiples de la surface du matériau de remplissage, et dans lequel les deuxièmes échos sont des échos individuels de la surface du matériau de remplissage.

10. Procédé pour déterminer un niveau de remplissage selon le procédé FMCW ou le procédé du temps de propagation des impulsions, le procédé comportant les étapes consistant à :

> détecter plusieurs courbes d'échos successives dans le temps qui comportent respectivement au moins un écho, mettre en oeuvre un procédé de suivi, déterminer respectivement un premier écho et un deuxième écho dans chacune des courbes d'échos détectées en exploitant les courbes d'échos, les premiers échos étant attribués à une première piste quelconque et les deuxièmes échos étant attribués à une deuxième piste quelconque, calculer une première relation fonctionnelle entre des positions successives dans le temps de la première piste et des positions successives dans le temps de la deuxième piste des courbes d'échos, détecter une courbe d'échos supplémentaire, déterminer la position d'un premier écho de la courbe d'échos supplémentaire ultérieure dans le temps en exploitant la courbe d'échos supplémentaire, le premier écho étant attribué à la première piste, calculer une position de la deuxième piste de la courbe d'échos supplémentaire en utilisant la position du premier écho de la courbe d'échos supplémentaire, ou la position de la première piste de la courbe d'échos supplémentaire, et la première relation fonctionnelle.

11. Elément de programme qui, lorsqu'il est exécuté sur un processeur (121) d'un appareil de mesure de niveau de remplissage (111) ordonne à l'appareil de mesure de niveau d'exécuter les étapes selon la revendication 10.

12. Support lisible par ordinateur (122) sur lequel est enregistré un élément de programme selon la revendication 11.

Fig. 1

Fig. 2

Fig. 3

Fig. 4

D/m — 501

$D_{T_4, j}$ — 506

508

$D_{T_4, j+1}$

504

$T_4$ — 510

$D_{T_4, j+6}$ — 509

505

$D_{T_3, j}$ — 502

$D_{T_3, j+1}$ — 507

503

$T_3$

$D_{T_3, j+6}$

10:00  10:10  10:20  10:30  t

2  4  6  8  10

# Fig. 5

Fig. 6

Alle mögliche funktionale Zusammenhänge:

$$T_{71} \longrightarrow T_{72} \qquad T_{72} \longrightarrow T_{73} \qquad T_{73} \longrightarrow T_{74}$$

$$T_{71} \longrightarrow T_{73} \qquad T_{72} \longrightarrow T_{74} \qquad N \cdot (N-1)\,/2 = \frac{4 \cdot 3}{2} = 6$$

$$T_{71} \longrightarrow T_{74}$$

Reduktion der Kombinatorik:

$$T_{71} \longrightarrow T_{72} \qquad N-1 = 3$$

$$T_{71} \longrightarrow T_{73}$$

$$T_{71} \longrightarrow T_{74}$$

Kein Verlust an Informationsgehalt:

$$T_{72} \longrightarrow T_{71} \longrightarrow T_{73} \; \hat{=} \; T_{72} \longrightarrow T_{73}$$

$$T_{72} \longrightarrow T_{71} \longrightarrow T_{74} \; \hat{=} \; T_{72} \longrightarrow T_{74}$$

$$T_{73} \longrightarrow T_{71} \longrightarrow T_{74} \; \hat{=} \; T_{73} \longrightarrow T_{74}$$

# Fig. 7

**IN DER BESCHREIBUNG AUFGEFÜHRTE DOKUMENTE**

**In der Beschreibung aufgeführte Patentdokumente**

- EP 2366983 A1
- DE 19824267 A1
- WO 2009037000 A2

**In der Beschreibung aufgeführte Nicht-Patentliteratur**

- **KIENCKE ; EGER.** *Messtechnik - Systemtheorie für Elektrotechniker,* ISBN 3-540-24310-0
- **BRONSTEIN ; SEMENDJAJEW ; MUSIOL ; MÜH-LING.** Taschenbuch der Mathematik
- *Mathematik für Ingenieure und Naturwissenschaftler,* vol. 3, ISBN 3-528-24937-4